# EUROPEAN PATENT SPECIFICATION

(11) **EP 0 323 238 B1**
(45) Date of publication and mention of the grant of the patent: **28.02.1996**
(21) Application number: 88312373.9
(22) Date of filing: 28.12.1988
(51) Int. Cl.: G02B 5/18

(54) **Diffraction grating and manufacturing method thereof**
Beugunsgitter und Methode zu seiner Herstellung
Réseau de diffraction et méthode de sa fabrication

(30) Priority: 28.12.1987 JP 331978/87; 28.12.1987 JP 331972/87
(43) Date of publication of application: 05.07.1989
(60) Divisional application: 95202075.8
(73) Proprietor: MATSUSHITA ELECTRIC INDUSTRIAL CO., LTD., Kadoma-shi, Osaka-fu, 571 (JP)
(72) Inventor: Iida, Masanori, Nara-shi Nara-ken, 631 (JP); Asakura, Hiroyuki, Tennouji-ku Osaka-shi Osaka-fu, 543 (JP); Nishioka, Minoru, Higashinada-ku Kobe-shi Hyogo-ken, 658 (JP); Murase, Koichi, Neyagawa-shi Osaka-fu, 572 (JP); Hagiwara, Kiyokazu, Hirakata-shi Osaka-fu 573 (JP)
(74) Representative: Crawford, Andrew Birkby

(56) References cited:
- EP-A- 0 110 184
- AU-B- 492 267
- US-A- 4 402 571
- JOURNAL OF OPTICS, vol 13, no 2, March/April 1982, pp 71-79, Paris, Fr; M. BREIDNE et al.: "A Systematic Numerical Study of Fourier Gratings"

## Description

### BACKGROUND OF THE INVENTION

### 1. Field of the Invention

This invention relates to a diffraction grating for use in spectroscopic instrument, optical communication instrument or the like and a method of manufacturing the same.

### 2. Description of the Prior Art

Diffraction gratings have been mainly used in optically measuring instrument as a wavelength dispersion element for selectively extracting a preferable wavelength from a certain waveform region. However, in general, the diffraction grating has a diffraction efficiency, which is largely affected by the wavelength, incident angle and polarization of an incident light. However, if conditions of use are limited, it is possible to optimize the sectional profile of the grating to obtain a high performance diffraction grating. At present, research is being conducted in this area.

Details of a study of various Fourier gratings are given in a Technical Report entitled "Optimization of Fourier gratings" published by the Institute of Optical Research, Royal institute of Technology, Stockholm published in 1980 where a wide range of parameters were considered using imputer analysis Techniques and it was included that for Fourier gratings expressed by the equation${\text{y =h}}_{\text{1}} {\text{sin Kx + h}}_{\text{2}} \text{sin (2Kx + φ)}$ the efficiency of the grating could by maximised by selecting an appropriate value of φ. For gratings with 0.15 < h/d < 0.21 the appropriate value of φ is 330°, approximately, and for all lower values of h/d the appropriate value of φ is 180°,

Similar conclusions are drawn in a paper entitled "A systematic numerical study of Fourier gratings" by Breidne and Maystre published in Journal of Optics, Vol. 13 (1982) Mar-Apri N°2, Paris which is derived from the above study.

Also, an article in Appl. Phys. 24, N°2, pp 147-150 (1981) shows an experimental verification that based on the fact that the manufacture of Fourier gratings composing their groove profile is possible by combining a fundamental harmonic and the second order harmonic through the holographic exposure technology, the efficiency of Fourier gratings can be made higher than that of Echelette gratings for wide wavelength region applications by locally optimizing the groove profile of the grating theoretically, in the microwave region.

Here, the Fourier gratings generally have the groove profile η(x) which can be expressed, with the direction perpendicular to the groove direction taken as the x-axis and the groove pitch expressed as d, in terms of the fundamental harmonic K and the second order harmonic 2K, where K = 2π/d, as follows:$\text{η (x) = h [sin (Kx) + γsin (2Kx + φ)]}$ where h, γ and φ are parameters for determining the profile. In addition, the groove profile of diffraction gratings described in the above-mentioned article corresponds to the case when h = 0.42, γ = 0.286 and φ = -90°.

In the article mentioned above, however, the local optimization is made under such a condition that the angular deviation between the light incident to the diffraction grating and the first order diffracted light to be reflected therefrom is 17°. This means that, for example, a light is incident thereto at λ/d = 1 from an angle apart by 8.5° from the Littrow angle.

In case that diffraction gratings are employed for optical communication applications, these are used at the neighborhood of the Littrow mount in many cases, and there is no case that these are used while maintaining an angular deviation of 17°. Therefore, the superiority of the Fourier gratings in the local optimization for the Littrow mount is not described quantitatively in the above-mentioned article. This is the first problem to be pointed out. Also, although a theoretical prediction has been verified experimentally in the microwave region, the groove profile of diffraction gratings actually experimented is considerably different from that which is locally optimized.

In general, optical communication uses a light having a wavelength region which ranges from 0.8 µm to 1.55 µm which is considerably shorter than that of the microwave region. As a result, it cannot be concluded that the superiority of diffraction grating locally optimized could be verified in all wavelength regions by having it verified only in the microwave region. This is the second problem to be pointed out.

"In addition, the groove profile obtained by the calculation in the above-mentioned article is only appropriate for a perfectly conductive groove surface. Therefore, the theoretically calculated profile is not valid for a groove surface which is an imperfect conductor."

As to polarization, an article in J. Opt. Soc. Am. A, 3, No. 11 pp. 1780-1787 (1986) describes such that if the light waves polarized in perpendicular and parallel to the groove direction are indicated as TM wave and TE wave, respectively, the groove profile is rectangular, but due to the conductivity that a metal of the surface of the diffraction grating has, variation of the efficiency of TM wave by the incident angle of a light is more rapid than that of TE wave particularly in a wavelength region of several micro or less meters as compared when the reflecting surface is perfectly conductive. This is the third problem to be pointed out.

Next, the conventional manufacturing method is the two-beam interference exposure method using a coherent light, but the photosensitive characteristic of a photosensitive layer to be formed on a substrate is produced in the range that film thickness residue of the photosensitive layer after development is approximately linearly related with the exposure amount, so that in actually making Fourier gratings, for example, as seen in Optica Acta 26, No. 11, pp. 1427-1441 (1979), two exposure processes and precision positioning control are required.

In addition, in the holographic exposure, it is general to expose an interference pattern obtained by superimposing plane waves to each other. In this case, however, since the coherent light from a spacial filter is of a divergent wave, the spacial coherence will be disturbed by optical elements such as, for example, lenses and mirrors which are insertedly disposed between the substrate and the spacial filter, which causes a slight distortion of the interference pattern to be exposed. To avoid such problem, a complicated optical system is required.

US-A-4,402,571 discloses a method of manufacturing diffraction gratings in which a photosensitive material is provided and exposed to a light intensity pattern. After development the pattern remaining is dependent on the light intensity pattern to which the material is exposed.

The present invention provides a diffraction grating for diffracting light which has a wavelength in a range of 0.8 µ m ≤ λ ≤ 1.55 µ m and is incident on said diffraction grating and for use in a mount satisfying the following condition:${\text{Θ}}_{\text{L}} {\text{- 5° ≤ Θ ≤ Θ}}_{\text{L}} \text{+ 5°,}$ where Θ denotes the incident angle of the incident light and Θ_{L} denotes the first order Littrow angle, said diffraction grating comprising:
a substrate;
a photosensitive layer formed on said substrate and having formed on a surface thereof a pattern of periodic grooves; and
a reflection film formed on said surface of said photosensitive layer,
wherein said grating has a groove profile η(x) given by:$\text{η(x) = h[sin(Kx) + γ sin(2Kx - 90°)],}$ where a direction perpendicular to the groove is indicated by x-axis, a groove pitch is indicated by d and K=2π/d,
   characterised in that the groove pitch d is related to the wavelength λ of the incident light such that:$\text{0.67 ≤ λ/d ≤ 1.15}$ and that parameters h and γ satisfy the following conditions:$\text{0.35 ≤ 2h/d ≤ 0.45}$$\text{0.10 ≤ γ ≤ 0.25.}$

An advantage of this invention is the provision of a diffraction grating which has high diffraction efficiency in the Littrow mount and which has low efficiency deviation caused by the polarization direction of incident light.

With the above-mentioned structure, diffraction efficiency in non-polarization is at a level of 85% or more, so that the deviation of the diffraction efficiency caused by the polarization of an incident light does not exceed 10%.

For manufacturing the diffraction grating, the present invention provides a method of manufacturing a diffraction grating having a groove profile η(x) given by:$\text{η (x) = h[sin(Kx) + γ sin(2Kx - 90°)],}$ where a direction perpendicular to the groove is indicated by x-axis, a groove pitch is indicated by d and K=2π/d, comprising the steps of:
forming on a substrate a photosensitive layer having a characteristic which may be represented by a characteristic curve of exposure amount versus the film thickness residue l/lo of said photosensitive layer after development;
subjecting said photosensitive layer to an interference exposure in said region of said characteristic curve; and
developing the exposed photosensitive layer to thereby obtain said diffraction grating,
wherein the exposure intensity distribution I(x) is expressed as${\text{I(x) = I}}_{\text{o}} {\text{+ I}}_{\text{1}} \text{sin(Kx),}$
wherein said characteristic curve has a region in which the value of the second order differential of said characteristic curve is positive and has no third order inflection point whereby said region can be approximated to a quadratic curve expressed by the formula l/lo = aI+ bI + c, and the following conditions are satisfied:${\text{0.35 ≤ 2h/d = I}}_{\text{1}} {\text{|b + 2aI}}_{\text{o}} \text{| ≤ 0.45}$${\text{0.10 ≤ γ = aI}}_{\text{1}} {\text{/2|b + 2aI}}_{\text{o}} \text{| ≤ 0.25,}$
where a and b respectively denote coefficients of the first and second terms of the formula expressing said quadratic curve.

Preferably, for example, in using a positive type photoresist, the following relation is satisfied:${\text{I}}_{\text{o}} {\text{+ I}}_{\text{1}} \text{< |b / 2a|,}$ and in using a negative type one, the following is satisfied:${\text{I}}_{\text{o}} {\text{+ I}}_{\text{1}} \text{> |b / 2a|}$ wherein b < 0.

In addition the application discloses an apparatus for manufacturing a diffraction grating comprising:
a laser for producing a light;
a half mirror arranged to divide light from said laser into two beams;
two mirrors respectively arranged to reflect the two beams in directions toward a photosensitive layer formed on a substrate which has a diameter of longitudinal length, L; and
two spatial filters each including a lens and a pinhole for respectively improving the spatial coherences of the two reflected beams from said two mirrors and for converting the two reflected beams to two divergent beams of light so that said photosensitive layer is interferentially exposed by the two divergent beams of light, said two spatial filters being spaced from each other by a distance C, and a middle point between the pinholes of said two spatial filters being spaced from said substrate by a distance H,
wherein L, C and H satisfy the following condition:${\text{H.C/L}}^{\text{2}} \text{≥ 32,}$ and that said lens and pinhole are arranged such that a deviation of the exposure intensity distribution on said substrate is within 20%.

### BRIEF DESCRIPTION OF THE DRAWINGS

Fig. 1 is a cross-sectional view of a diffraction grating of this invention;
Fig. 2 is a perspective view of a diffraction grating shown in Fig. 1;
Fig. 3 is a photosensitive curve of a positive type photosensitive layer and a schematic drawing showing the groove profile of a diffraction grating formed thereby;
Fig. 4 shows the diffraction efficiency versus the value of 2h/d in the Littrow mount calculated when γ = 0.05, and λ/d = 0.7, which value of γ does not fall within the scope of claim 1;
Fig. 5 shows the groove profile when γ= 0.05, and 2h/d = 0.383, which value of γ does not fall within the scope of claim 1;
Fig. 6 shows the diffraction efficiency versus the value of 2h/d in the Littrow mount calculated when γ = 0.32 and λ /d = 0.9, which value of γ does not fall within the scope of claim 1;
Fig. 7 shows the groove profile when γ = 0.32 and 2h/d = 0.40, which value of γ does not fall within the scope of claim 1;
Fig. 8 shows the diffraction efficiency versus the value of 2h/d in the Littrow mount calculated when γ = 0.1 and λ/d = 0.67;
Fig. 9 shows the groove profile when γ = 0.1 and 2h/d = 0.35;
Fig. 10 shows the diffraction efficiency versus the value of 2h/d in the Littrow mount calculated when γ = 0.2 and λ/d = 0.8;
Fig. 11 shows the diffraction efficiency versus the value of λ/d in the Littrow mount calculated when γ = 0.2 and 2h/d = 0.47, which value of 2h/d does not fall within the scope of claim 1;
Fig. 12 shows the groove profile when γ = 0.2 and 2h/d = 0.47, which value of 2h/d does not fall within the scope of claim 1;
Fig. 13 shows the diffraction efficiency versus the value of λ/d in the Littrow mount calculated when γ = 0.2 and 2h/d = 0.435;
Fig. 14 shows the dependence of the diffraction efficiency of a diffraction grating measured under such conditions as γ = 0.2, λ/d = 1.0 and 2h/d = 0.435 on the incident angle of a light;
Fig. 15 is a scanning electron microscopic (SEM) observation of the diffraction grating to be measured;
Fig. 16 illustrates an embodiment of a manufacturing method of the diffraction grating shown in Fig. 1;
Fig. 17 shows the range that the deviation of the space of interference patterns to be exposed on the surface of a substrate becomes within 1%.

### DESCRIPTION OF THE PREFERRED EMBODIMENTS

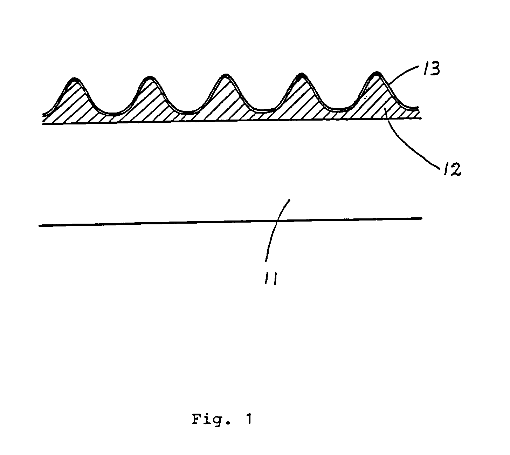

In Fig. 1, the reference numerals 11, 12 and 13 indicate a substrate, a photosensitive layer and a reflection film, respectively.

On the substrate 11 is disposed the photosensitive layer 12 on which cyclic grooves are patterned using the holographic exposure. Then, the reflection film 13 is formed thereon thinly at such a degree that the groove profile patterned on the photosensitive layer 12 is not damaged thereby to construct a diffraction grating.

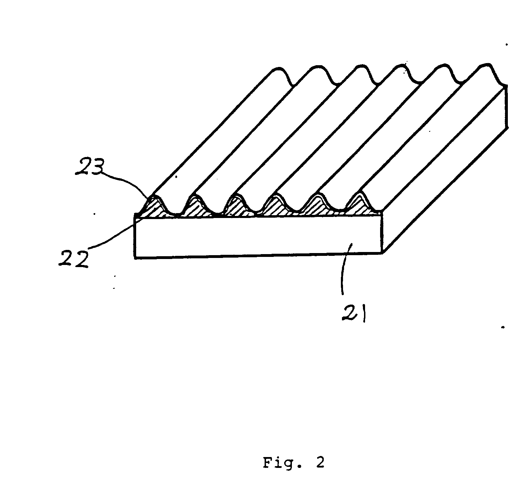

Fig. 2 is a perspective view of the diffraction grating shown in Fig. 1. The reference numerals 21, 22 and 23 indicate a substrate, a photosensitive layer and a reflection film, respectively. The substrate shown in this figure is plane and rectangular, but the shape thereof is not limited to this.

Intensity distribution of a light to be exposed on the photosensitive layer through the holographic technology is generally expressed in the trigonometrically functional form in case of the two-beam interference exposure of a coherent light. If this is directly transferred to the photosensitive layer, it will become in the sinusoidal form, so that by giving a nonlinearity to the photosensitive characteristic of the photosensitive layer, the groove profile after development can be made such as to be distorted from the sinusoidal form.

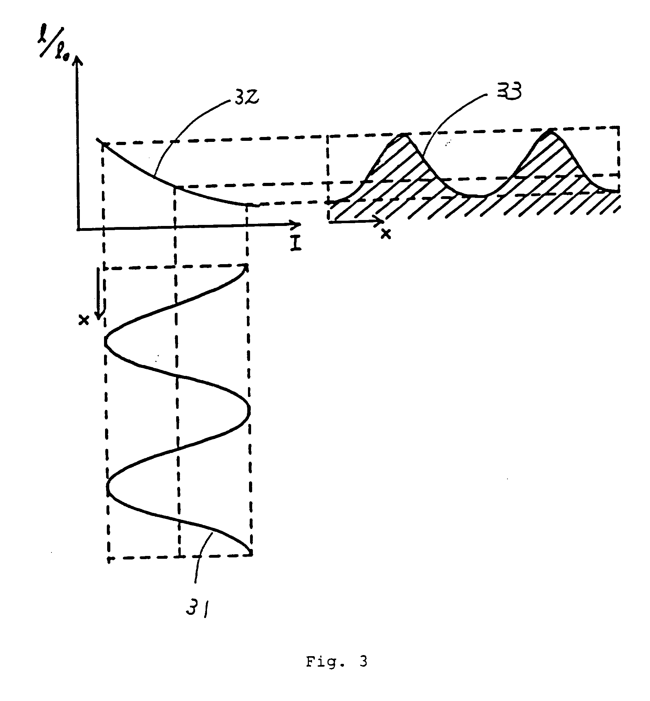

In Fig. 3, the reference numerals 31, 32 and 33 indicate an intensity distribution of a light to be exposed, a photosensitive curve of a positive type photosensitive layer, i.e., photosensitive layer the exposed area of which is removed after development, and a groove profile obtained after development, respectively. This figure shows one of embodiments for making such conditions as γ = 0.2 and 2h/d = 0.435 realizable in Fourier gratings, in which, with the intensity distribution of a light to be exposed expressed as I(x) = I₀ + I₁, sin (Kx), the following conditions are obtained:${\text{I}}_{\text{0}} {\text{= 2.32 mJ, I}}_{\text{1}} \text{= 1.74 mJ and}$$\text{d = 0.348 µm.}$

In addition, with the curve obtained by approximating the photosensitive curve showing the film thickness residue ℓ/ℓ₀ in the exposed area of the photosensitive layer to a quadratic function expressed as${\text{ℓ/ℓ}}_{\text{0}} {\text{= aI}}^{\text{2}} \text{+ bI + c,}$ the following conditions are obtained:$\text{a = 0.1, b = -0.899 and c = 0.25.}$

In the area to be exposed of the photosensitive layer can be approximated to a quadratic curve, then there exists no inflection point of the third order. The intensity distribution 31 of an interference light is expressed in the trigonometrically functional form and the photosensitive curve 32 has such a characteristic that the second order differential coefficient is always positive in the area to be exposed. As a result, the change in the film thickness residue of the photosensitive layer in the area to be exposed is decreased with an increase in exposure amount. Thus, if the exposure is carried out under the condition of the intensity distribution 31, then the groove profile 33 after development will become in such a profile as to be distorted from a sinusoidal form in that the top portion of the groove is narrowed and the root portion thereof is made round. And a diffraction grating can be constructed by forming a thin reflection film at such a degree as not to damage to the groove profile on the photosensitive layer. The above-mentioned embodiment describes on a positive type photoresist, but it is easily estimated that if a negative type one, i.e., photoresist that unexposed area of a photosensitive layer is removed after development, is used, the same result is obtainable. Thus, the above-exemplified numerical values are not limited to them.

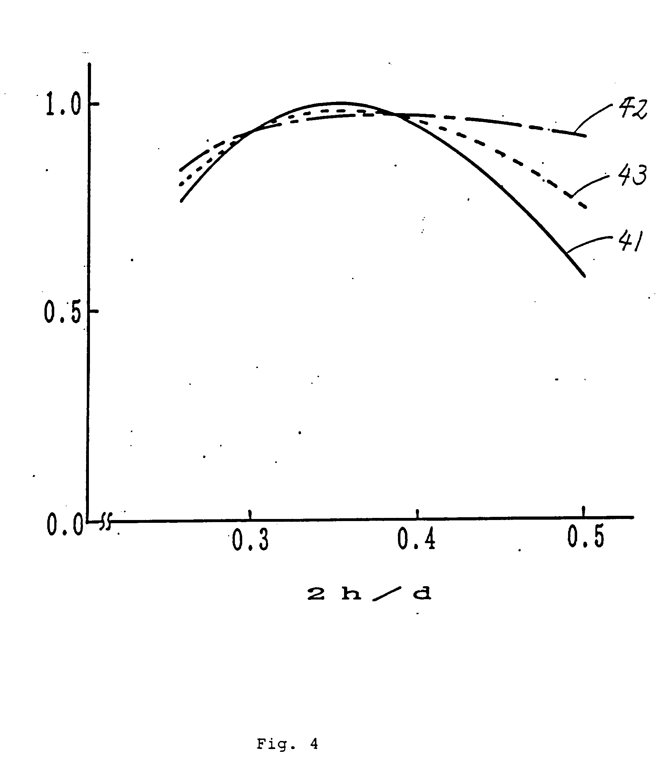

In Fig. 4, conditions such as γ = 0.05 and λ/d = 0.7 are used. A curve 41 shown by the continuous line indicates the diffraction efficiency for the TE wave, and a curve 42 shown by the alternate long and short dash line indicates the diffraction efficiency for the TM wave. A curve 43 shown by the short dashes line indicates the diffraction efficiency obtained when an incident light is of non-polarization. The diffraction grating is constructed through numerical procedures described in J. Opt. Soc. Am. A 4, pp. 465-472 (1987) under the Littrow mount condition and the surface thereof is made perfectly conductive. The region in which the diffraction efficiency 43 when the incident light is non-polarized exceeds 85% is as follows:$\text{0.26 ≦2h/d ≦ 0.46.}$

As to the deviation of the diffraction efficiency due to the polarization, particularly when$\text{0.26 ≦2h/d ≦0.44,}$ it is kept within 10%, which means that the dependence of diffraction efficiency on polarization is small.

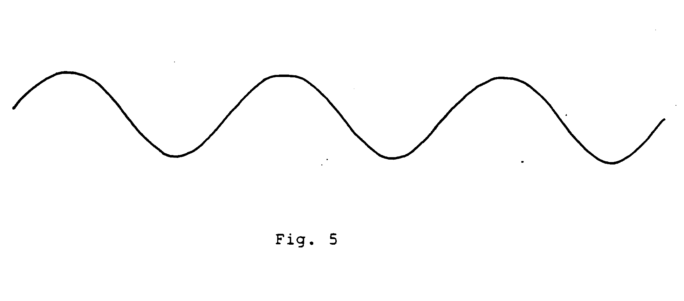

Fig. 5 shows the groove profile of the diffraction grating for which the numerical calculations were carried out. This is slightly distorted from the sinusoidal groove profile by an amount at which the second order harmonic is added.

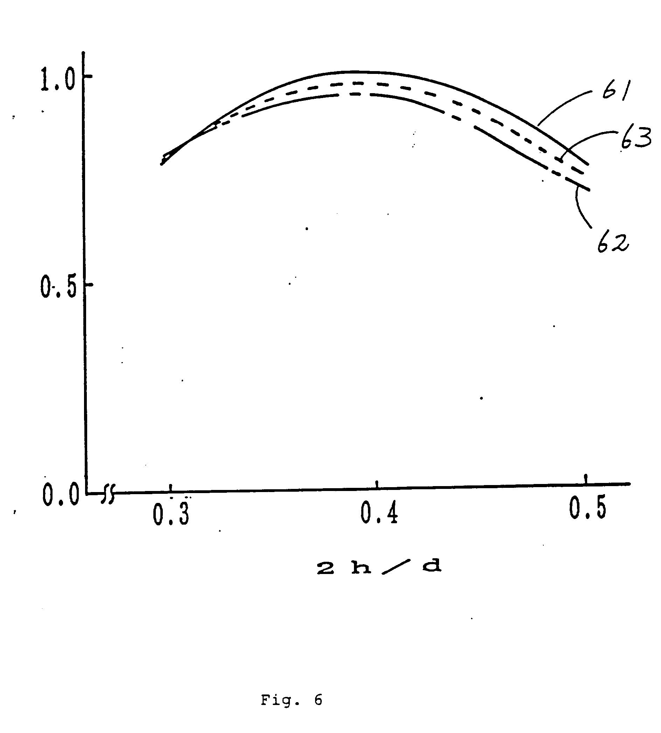

In Fig. 6, conditions such as γ= 0.32 and λ/d = 0.9 are used. Curves 61, 62 and 63 show diffraction efficiencies for TE wave, TM wave and in non-polarization respectively. The region in which a diffraction efficiency 63 in non-polarization exceeds 85% is as follows:$\text{0.31 ≦ 2h/d ≦ 0.46.}$ In this region, the deviation of the diffraction efficiency due to the polarization is kept within 8%.

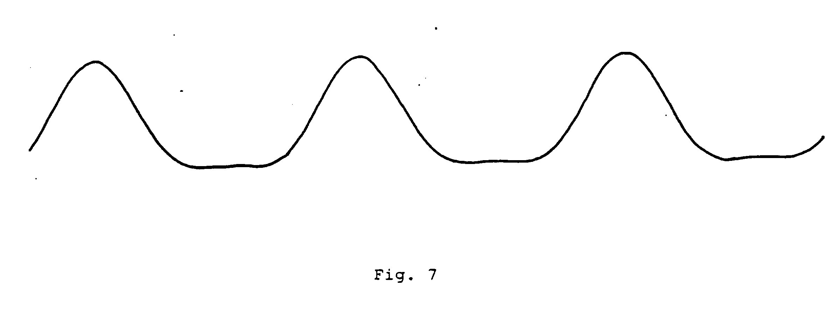

Fig. 7 shows the groove profile of the diffraction grating for which the numerical calculations were carried out. As the distortion from the sinusoidal form is increased, the region in which the diffraction efficiency is high is shifted in the direction that the value of 2h/d is increased.

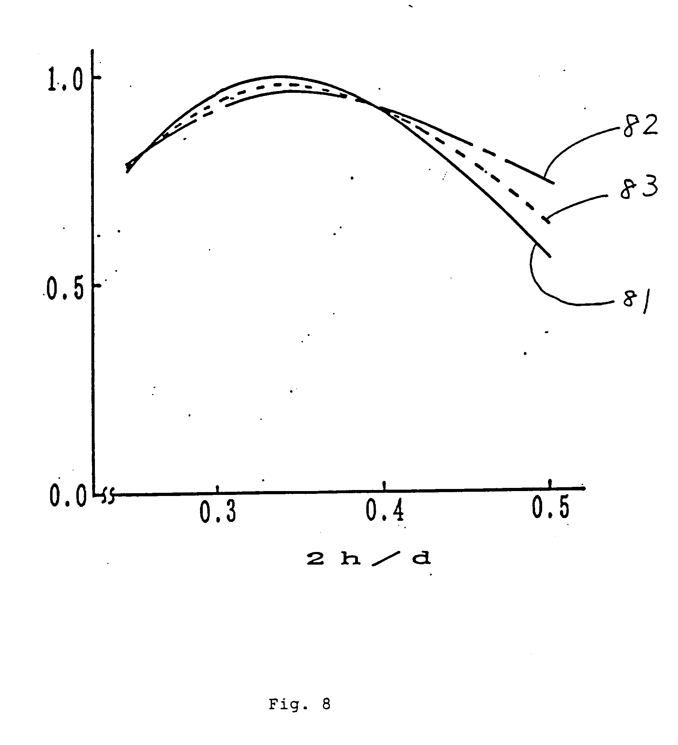

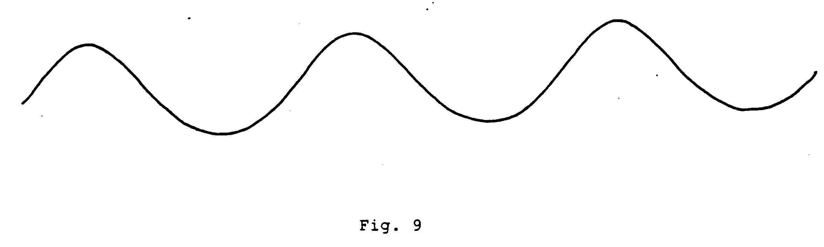

Fig. 8 shows the case that conditions such as γ = 0.1 and λ/d = 0.67 are used. Curves 81, 82 and 83 show diffraction efficiencies of TE wave, TM wave and in non-polarization respectively. The region in which a diffraction efficiency 83 in non-polarization exceeds 85% is as follows:$\text{0.26 ≦ 2h/d ≦ 0.43.}$ In this region, the deviation of the diffraction efficiency due to the polarization is kept within 5%, which means that its dependence on polarization is particularly small. Fig. 9 shows the groove profile of the diffraction grating for which the numerical calculations were carried out.

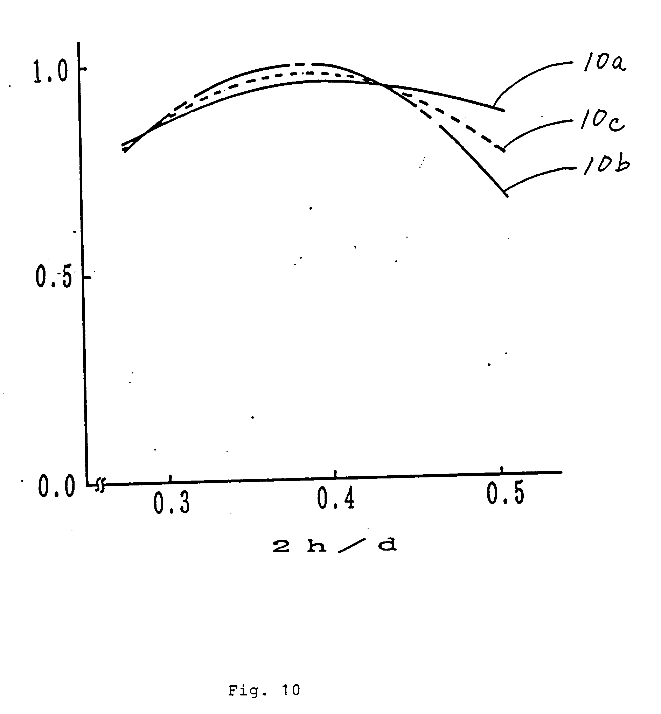

Fig. 10 shows the case that conditions such as γ = 0.2 and λ/d = 0.8 are used. Curves 10a, 10b and 10c show diffraction efficiencies of TE wave, Tm wave and in Non-polarization respectively. The region in which a diffraction efficiency 10c in non-polarization exceeds 85% is as follows:$\text{0.29 ≦ 2h/d ≦ 0.48.}$ This means that a considerably wide region of 2h/d is maintained. In this region, the deviation of the diffraction efficiency due to the polarization is kept within 10%.

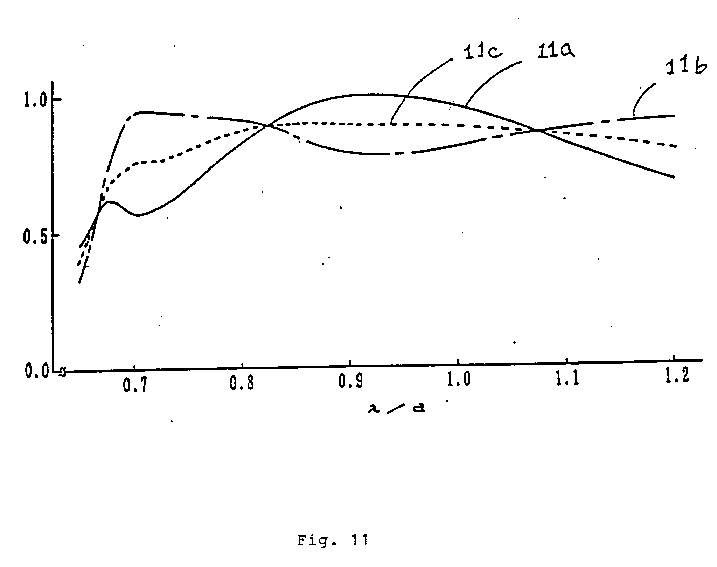

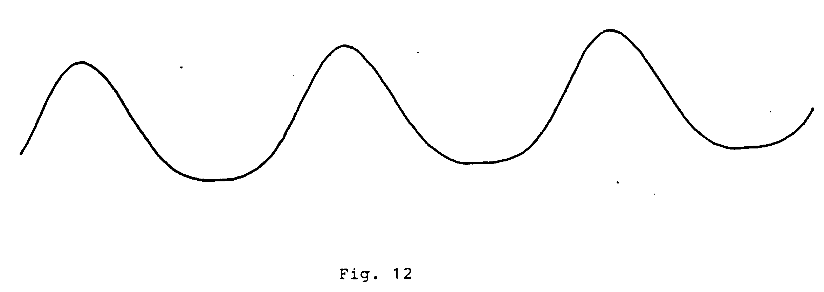

Fig. 11 is graphs showing the dependence of diffraction efficiency on wavelength when 2h/d = 0.47 is taken in Fig. 10. Curves 11a, 11b and 11c show diffraction efficiencies of TE wave, TM wave and in non-polarization respectively. The region in which a diffraction efficiency 11c in non-polarization exceeds 85% is as follows:$\text{0.78 ≦ λ/d ≦ 1.15.}$ However, in the region of 0.88 < λ/d < 1.0, the deviations of diffraction efficiencies in both polarizations become large. Fig. 12 shows the groove profile of the diffraction grating for which the numerical calculations were carried out.

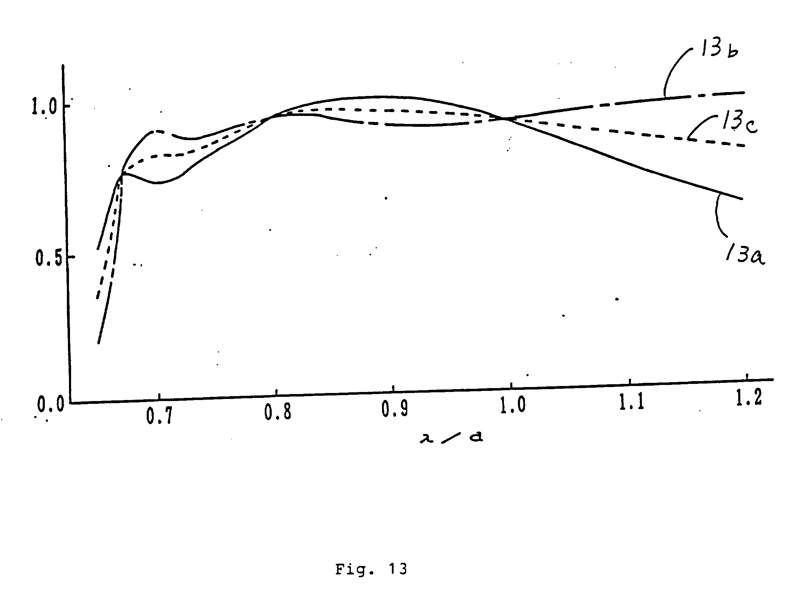

Fig. 13 is a graph showing the dependence of diffraction efficiency on wavelength when 2h/d = 0.435 where the diffraction efficiencies in both polarizations are equal to each other in Fig. 10 is taken. Curves 13a, 13b and 13c show diffraction efficiencies of TE wave, TM wave and in non-polarization respectively. The region in which a diffraction efficiency 13c in non-polarization exceeds 85% is as follows:$\text{0.70 ≦ λ/d ≦ 1.15.}$ Particularly, in a wide region of wavelength satisfying such a condition as 0.73 ≦ λ/d ≦ 1.07, the deviation of the diffraction. efficiency due to the polarization is kept within 10%.

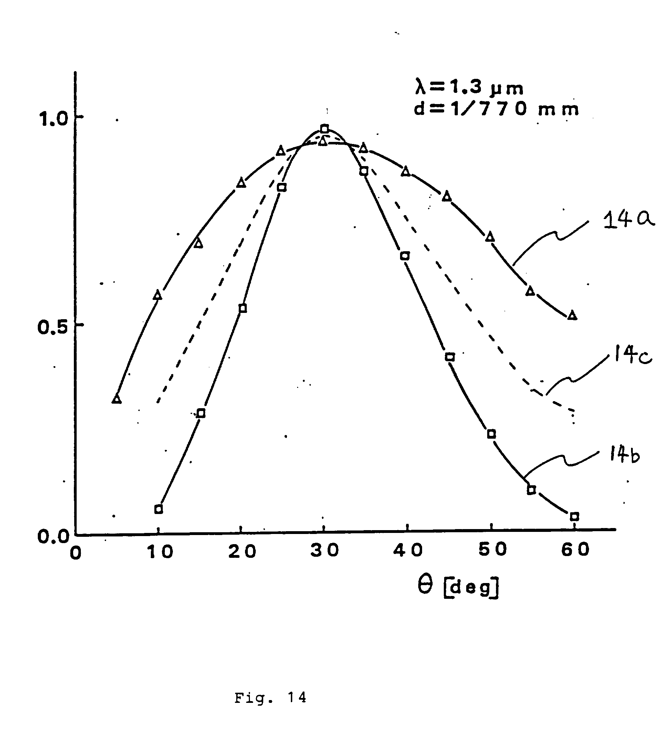

Fig. 14 shows the dependence of diffraction efficiency on incident angle resulted from measurements using a diffraction grating actually produced by forming a photosensitive layer on a glass substrate and then applying the holographic exposure thereto. The groove pitch (distance between adjacent two grooves) is 1.3 µm, on the surface thereof is evaporated gold whose reflectivity exceeds 99%, and a semiconductor laser of a 1.3 µm band is used as a test light.

In Fig. 14, an incident angle of 30° corresponds to the Littrow angle. The curve 14a is for the diffraction efficiency of TE wave, the curve 14b for the diffraction efficiency of TM wave, and the curve 14c for that in non-polarization. Marks Δ and □ show points measured for the TE wave 14a and the TM wave 14b, respectively. Generally, under such a condition as λ/d = 1, the diffraction efficiency is increased in the first order Littrow mount, and it is decreased as the incident angle is apart from the Littrow angle. As seen in Fig. 14, in both polarizations, the maximum value of diffraction efficiency is obtained with the Littrow-mount and a diffraction efficiency as high as 95% is obtained in non-polarization. The diffraction efficiencies at that time are approximately identical to calculated values in Fig. 13. As clear from Fig. 14, the diffraction efficiency for an incident angle in a range of being apart 5° from the Littrow angle maintains 85% or more in non-polarization, and the efficiency deviation due to polarization is small such as to be within 10%. In case that an incident angle is apart 5° from the Littrow angle, the angular deviation between the incident angle and the reflection angle of the first order diffracted light corresponds to 10°.

Further as clear from Fig. 14, if a light is incident from an angle further apart from this, the diffraction efficiency 14b of the TM wave is rapidly decreased due to the permittivity of the surface of diffraction grating as compared with the diffraction efficiency 14a of the TE wave. For example, when a light is incident from an angle apart by 10° from the Littrow angle, the deviation of diffraction efficiency between both polarizations exceeds 20%, so that the diffraction efficiency 14c in non-polarization will become low.

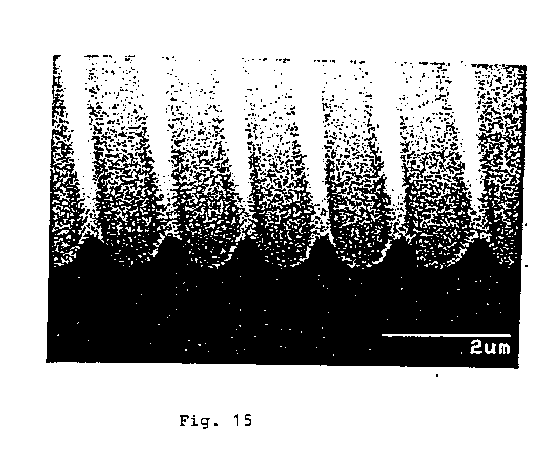

In Fig. 15, the groove profile of the diffraction grating used for measurement is observed by using the SEM. In this case, the groove profile has a profile corresponding to conditions such as γ= 0.2, λ/d = 1.0 and 2h/d = 0.435. In addition, various profiles are considered to be provided by changing the combination of parameters 2h/d, γ and λ/d. As a result, it is not limited to the above-mentioned embodiments.

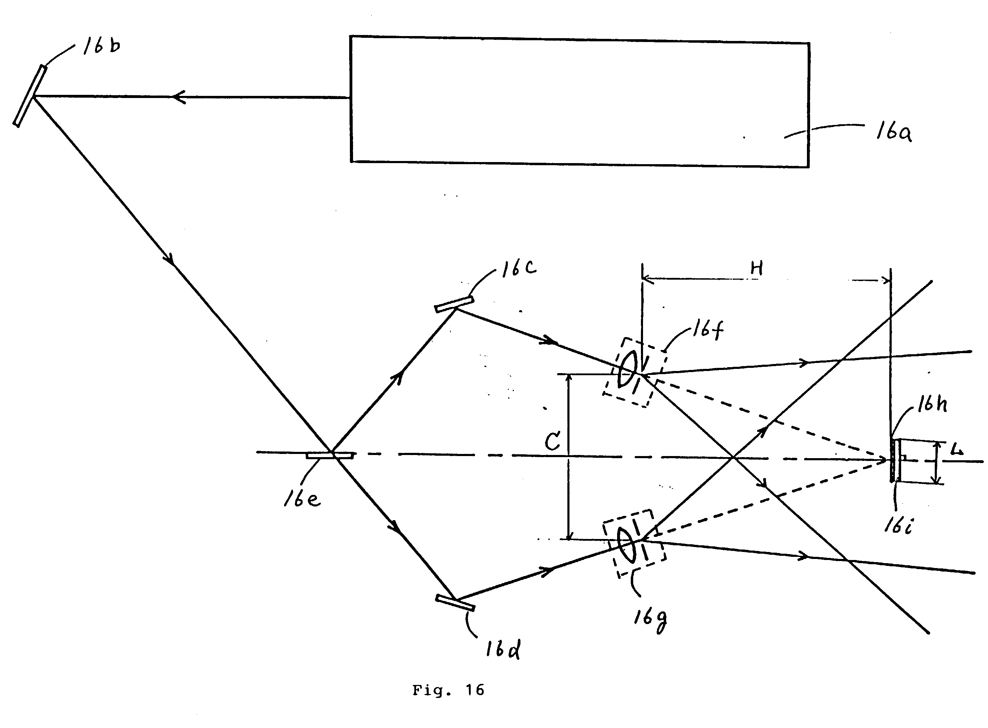

In Fig. 16, an exposing laser is indicated at 16a, mirrors are indicated at 16b, 16c and 16d, a beam splitter at 16e, spacial filters consisting of a lens and pinhole at 16f and 16g, a photosensitive layer at 16h and a substrate at 16i. The mirrors 16c and 16d are disposed so that the beams divided into two can be interfered with each other on the photosensitive layer 16h of the substrate 16i.

A coherent light sent from the exposing laser 16a is reflected by the mirror 16b and then divided into two beams through the beam splitter 16e. The beams thus divided are respectively reflected by the mirrors 16c and 16d to go to the spacial filters 16f and 16g thereby to increase their spacial coherence and to become divergent waves, thus being superimposed to each other on the photosensitive layer 16h. It is described, for example, in E. Wolf, "Progress in Optics XIV", ch. V, pp. 205 (North-Holland 1976) that an interference pattern produced by superimposing divergent waves to each other generally becomes in the hyperbolic form.

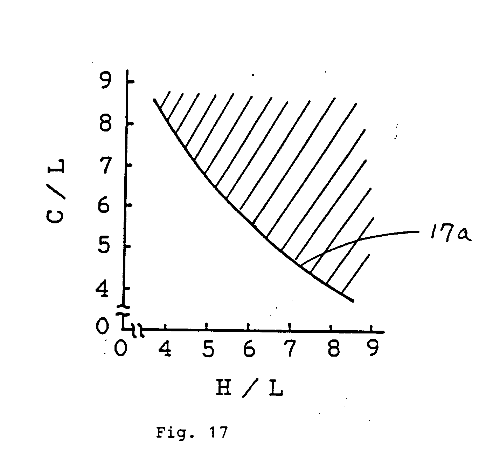

Referring to Fig. 17, supposing that the region that when the distance between the pinholes of the spacial filters 16f and 16g is expressed by C, the distance between the middle point of the space between the pinholes and the photosensitive layer 16h is expressed by H, and the length of longer side of the substrate 16i is expressed by L, it is shown that the rate of the difference of the pattern interval between the interference patterns at the edge portion of the substrate 16i (d1) and the pattern interval between those at the center portion thereof (d0), i.e., (d1 - d0) / d0 , does not exceed 1%. In Fig. 17, the ordinate and abscissa are C/L and H/L, respectively. A boundary line 17a indicates a curve that it becomes 1%, and the shaded area indicates the region where it is below 1%. The boundary line 17a satisfies the following condition:${\text{C x H/L}}^{\text{2}} \text{= 32}$

As a result, the interference pattern to be exposed under the condition of C x H/L ≧ 32 can have the pattern interval kept within 1% on the surface of a substrate to be exposed by adopting only a part of the interference patterns of the hyperbolic form as shown in Fig. 16, so that the interference pattern can be regarded to be linear. Therefore, there is no need to insertedly use any optical instrument between the spacial filters and substrate. This means that the spacial coherence is improved and interference exposure can be achieved by using an optical system which is simple in structure.

In addition, since the envelope of the intensity distribution on the photosensitive layer 16h is of the Gaussian distribution, in order to obtain a uniform groove profile all over the substrate in performing the exposure for a constant period of time, it is required that the deviation of the intensity which the envelope of a light to be exposed all over the substrate indicates is kept within 20% at the central portion where it is highest and the edge portion where it is lowest. For example, when the deviation of exposure intensity of an actually produced diffraction granting is 20%, even when non-polarized, a diffraction efficiency of 80% or more can be obtained.

As an example of such structure, when settings are made as L = 30 mm, H = 600 mm and C = 400mm, and an objective lens with a magnification of 40 is used in the spacial filter, the diameter of a beam to be interfered on the substrate is 140 mm, the deviation of the envelope of intensity distribution on the surface of the photosensitive layer to be exposed is kept within 10%, the value of C x H/L is 260, and the deviation between the interval of the interference patterns at the central and edge portions of the substrate is kept within 0.1%, which means that no problem arises practically.

Also, the mirror 16b shown in Fig. 16 is omissible. No limitation is made to the above-mentioned embodiments.

## Claims

1. A diffraction grating for diffracting light which has a wavelength in a range of 0.8 µ m ≤ λ ≤ 1.55 µ m and is incident on said diffraction grating and for use in a mount satisfying the following condition:${\text{Θ}}_{\text{L}} {\text{- 5°≤ Θ ≤ Θ}}_{\text{L}} \text{+ 5°,}$ where e denotes the incident angle of the incident light and Θ_{L} denotes the first order Littrow angle, said diffraction grating comprising:
a substrate;
a photosensitive layer formed on said substrate and having formed on a surface thereof a pattern of periodic grooves; and
a reflection film formed on said surface of said photosensitive layer,
wherein said grating has a groove profile η(x) given by:$\text{η (x) = h[sin(Kx) + γsin(2Kx - 90°)],}$ where a direction perpendicular to the groove is indicated by x-axis, a groove pitch is indicated by d and K=2π/d,
characterised in that the groove pitch d is related to the wavelength λ of the incident light such that:$\text{0.67 ≤ λ/d ≤ 1.15}$ and that parameters h and γ satisfy the following conditions:$\text{0.35 ≤ 2h/d ≤ 0.45}$$\text{0.10 ≤ γ ≤ 0.25.}$

2. A method of manufacturing a diffraction grating having a groove profile η(x) given by:$\text{η(x) = h[sin(Kx) + γsin(2Kx - 90°)],}$ where a direction perpendicular to the groove is indicated by x-axis, a groove pitch is indicated by d and K=2π/d, comprising the steps of:
forming on a substrate a photosensitive layer having a characteristic which may be represented by a characteristic curve of exposure amount versus the film thickness residue ℓ/ℓₒ of said photosensitive layer after development;
subjecting said photosensitive layer to an interference exposure in said region of said characteristic curve; and
developing the exposed photosensitive layer to thereby obtain said diffraction grating,
wherein the exposure intensity distribution I(x) is expressed as${\text{I(x) = I}}_{\text{o}} {\text{+ I}}_{\text{1}} \text{sin(Kx),}$
wherein said characteristic curve has a region in which the value of the second order differential of said characteristic curve is positive and has no third
order inflection,point whereby said region can be approximated to a quadratic curve expressed by the formula ℓ/ℓ₀ = aI+bI+c, and the following conditions are satisfied:${\text{0.35 ≤ 2h/d = I}}_{\text{1}} {\text{|b + 2aI}}_{\text{o}} \text{| ≤ 0.45}$${\text{0.10 ≤ γ = aI}}_{\text{1}} {\text{/2 |b + 2aI}}_{\text{o}} \text{| ≤ 0.25,}$ where a and b respectively denote coefficients of the first and second terms of the formula expressing said quadratic curve.

3. A method according to claim 2, wherein said photosensitive layer is a positive type photoresist, and the following condition is satisfied:${\text{I}}_{\text{o}} {\text{+ I}}_{\text{l}} \text{< |b/2a|.}$

4. A method as claimed in claim 2, wherein said photosensitive layer is a negative type photoresist, and the following conditions are satisfied:$\text{b < 0}$${\text{I}}_{\text{o}} {\text{+ I}}_{\text{l}} \text{> |b/2a|.}$

## Patentansprüche

1. Beugungsgitter zum Beugen von Licht, das eine Wellenlänge in einem Bereich von 0,8 µm ≤ λ ≤ 1,55 µm besitzt und auf das Beugungsgitter einfällt und zur Verwendung in einer Größe dient, die die nachfolgende Bedingung erfüllt:${\text{θ}}_{\text{L}} {\text{- 5° ≤ θ ≤ θ}}_{\text{L}} \text{+ 5°,}$ wobei θ den Einfallswinkel des einfallenden Lichts und θ_{L} den Littrow-Winkel erster Ordnung bezeichnen, wobei das Beugungsgitter aufweist:
ein Substrat;
eine photosensitive Schicht, die auf dem Substrat gebildet ist und auf einer Oberfläche davon ein Muster periodischer Nuten gebildet besitzt; und
einen Reflexionsfilm, der auf der Oberfläche der photosensitiven Schicht gebildet ist,
wobei das Gitter ein Nutenprofil η(x) besitzt das gegeben ist durch:$\text{η(x) = h [sin (Kx) + γ sin (2Kx - 90°)],}$ wobei eine Richtung senkrecht zu der Nut durch die x-Achse angegebene ist, ein Nuten-Teilungsabstand durch d angegeben ist und K = 2π/d
gekennzeichnet dadurch, daß der Nut-Teilungsabstand d zu der Wellenlänge λ des einfallenden Lichts wie folgt in Bezug gesetzt ist:$\text{0,67 ≤ λ/d ≤ 1,15}$ und daß die Parameter h und γ folgenden Bedingungen folgen:$\text{0,35 ≤ 2h/d ≤ 0,45}$$\text{0,10 ≤ γ ≤ 0,25.}$

2. Verfahren zum Herstellen eines Beugungsgitters, das ein Nutenprofil η(x) besitzt, das gegeben ist durch:$\text{η(x) = h[sin (Kx) + γ sin(2Kx - 90°)]}$ wobei eine Richtung senkrecht zu der Nut durch die x-Achse angegeben ist, ein Nuten-Teilungsabstand durch d angegeben ist und K = 2π/d ist, das folgende Schritte aufweist:
Bildung auf einem Substrat einer photoleitenden Schicht, die eine Charakteristik besitzt, die durch eine charakteristische Kurve eines Belichtungsbetrags gegenüber der Filmdicken ℓ/ℓ₀ der photoleitenden Schicht nach der Entwicklung dargestellt werden kann;
Unterwerfung der photoleitenden Schicht einer Interferenzbelichtung in dem Bereich der charakteristischen Kurve und
Entwicklung der belichteten, photosensitiven Schicht, um dadurch das Beugungsgitter zu erhalten, wobei die Belichtungsintensitätsverteilung l(x) ausgedrückt wird als${\text{I(x) = I}}_{\text{0}} {\text{+ I}}_{\text{1}} \text{sin(Kx),}$ wobei die charakteristische Kurve einen Bereich besitzt, in dem der Wert des Differentials der zweiten Ordnung der charakteristischen Kurve positiv ist und keinen Wendepunkt dritter Ordnung besitzt, wodurch der Bereich durch eine quadratische Kurve angenähert werden kann, ausgedrückt durch die Formel ℓ/ℓ₀ = al + bl + c,
und die nachfolgenden Bedingungen erfüllt werden:${\text{0.35 ≤ 2h/d = I}}_{\text{1}} {\text{|b + 2aI}}_{\text{0}} \text{| ≤ 0,45}$${\text{0.10 ≤ γ aI}}_{\text{1}} {\text{/2 |b + 2aI}}_{\text{0}} \text{| ≤ 0,25,}$ wobei a und b jeweils die Koeffizienten des ersten und des zweiten Terms der Formel bezeichnen, die die quadratische Kurve angibt.

3. Verfahren nach Anspruch 2, wobei die photosensitive Schicht ein Photoresist vom positiven Typ ist und die nachfolgende Bedingung erfüllt wird:${\text{I}}_{\text{0}} {\text{+ I}}_{\text{1}} \text{< |b/2a|.}$

4. Verfahren nach Anspruch 2, wobei die photosensitive Schicht ein Photoresist vom negativen Typ ist und die nachfogenden Bedingungen erfüllt werden:$\text{b<0}$${\text{I}}_{\text{0}} {\text{+ I}}_{\text{1}} \text{< |b/2a|.}$

## Revendications

1. Réseau de diffraction pour diffracter une lumière de longueur d'onde comprise entre 0,8 µm _{≦} λ ≦ 1,55 µm et tombe sur ledit réseau de diffraction et pour une utilisation dans un montage satisfaisant à la condition suivante:${\text{⊖}}_{\text{L}} {\text{- 5° ≤⊖ ≤⊖}}_{\text{L}} \text{+ 5°,}$ où ⊖ désigne l'angle d'incidence de la lumière incidente et ⊖_{L} désigne l'angle de Littrow de premier ordre, ledit réseau de diffraction comportant :
un substrat;
une couche photosensible formée sur ledit substrat et présentant sur une de ses surfaces un motif de gorges périodiques; et
une pellicule réfléchissante formée sur ladite surface de ladite couche photosensible,
dans lequel ledit réseau possède un profil de gorge η(x) exprimé par :$\text{η(x) = h[sin(Kx) + γ sin(2Kx - 90°)],}$ où une direction perpendiculaire à la gorge est désignée par l'axe des x, un pas de gorge est désigné par d et K = 2 π/d,
caractérisé en ce que le pas de gorge d est lié à la longueur d'onde λ de la lumière incidente de telle sorte que :$\text{0,67 ≤ λ/d ≤ 1,15}$ et en ce que les paramètres h et γ satisfont aux conditions suivantes :$\text{0,35 ≤ 2h/d ≤ 0,45}$$\text{0,10 ≤ y ≤ 0,25.}$

2. Procédé de fabrication d'un réseau de diffraction ayant un profil de gorge η(x) exprimé par :$\text{η(x) = h[sin(Kx) + γ sin(2Kx - 90°)],}$ où une direction perpendiculaire à la gorge est indiquée par l'axe x, un pas de gorge est indiqué par d et K = 2π/d, comportant les étapes consistant à :
former sur un substrat une couche photosensible présentant une caractéristique pouvant être représentée par une courbe caractéristique du degré d'exposition en fonction du résidu d'épaisseur de pellicule ℓ/ℓ₀ de ladite couche photosensible après développement;
soumettre ladite couche photosensible à une exposition d'interférence dans ladite région de ladite courbe caractéristique; et
développer la couche photosensible exposée pour ainsi obtenir ledit réseau de diffraction,
dans lequel la répartition d'intensité d'exposition I(x) est exprimée par${\text{I(x) = I}}_{\text{0}} {\text{+ I}}_{\text{1}} \text{sin(Kx),}$ dans lequel ladite courbe caractéristique possède une région dans laquelle la valeur du différentiel de second ordre de ladite courbe caractéristique est positif et ne possède aucun point d'inflexion du troisième ordre de telle sorte que ladite région peut être exprimée de manière approchée à une courbe quadratique par la formule${\text{ℓ/ℓ}}_{\text{0}} {\text{= aI}}^{\text{2}} \text{+ bI + c}$ et les conditions suivante sont satisfaites :${\text{0,35 ≤ 2h/d = I}}_{\text{1}} {\text{|b + 2aI}}_{\text{0}} \text{| ≤ 0,45}$${\text{0,10 ≤ γ = aI}}_{\text{1}} {\text{/2 |b + 2aI}}_{\text{0}} \text{| ≤ 0,25,}$ où a et b désignent respectivement les coefficients des premier et second termes de la formule exprimant ladite courbe quadratique.

3. Procédé selon la revendication 2, dans lequel ladite couche photosensible est un vernis photosensible de type positif, et la condition suivante est satisfaite:${\text{I}}_{\text{0}} {\text{+ I}}_{\text{1}} \text{< |b/2a|.}$

4. Procédé selon la revendication 2, dans lequel ladite couche photosensible est un vernis photosensible de type négatif, et les conditions suivantes sont satisfaites :$\text{b < 0}$${\text{I}}_{\text{0}} {\text{+ I}}_{\text{1}} \text{> |b/2a|.}$
